# EUROPÄISCHE PATENTANMELDUNG

(11) **EP 0 846 970 A1**
(43) Veröffentlichungstag der Anmeldung: **10.06.1998**
(21) Anmeldenummer: 96402677.7
(22) Anmeldetag: 09.12.1996
(51) Int. Cl.: G02B 6/44

(54) **Verfahren und Vorrichtung zum Herstellen eines optischen Aderbündels oder optischen Kabels**

(71) Anmelder: ALCATEL ALSTHOM COMPAGNIE GENERALE D'ELECTRICITE, 75008 Paris (FR)
(72) Erfinder: Nothofer, Klaus, 40699 Erkrath (DE); Barker, Jeffrey, Hickory, NC 28101 (US)
(74) Vertreter: Mende, Dirk

(57) **Zusammenfassung**

Bei einem Verfahren bzw. einer Vorrichtung zum Herstellen eines eine Mehrzahl von optischen Adern (5) aufweisenden optischen Aderbündels (6) oder optischen Kabels (1) werden in einem kontinuierlichen Prozeß die optischen Adern (5) gleichzeitig durch die Extrusion jeweils einer Aderhülle (7) um zumindest eine optische Faser (9) gebildet und die optischen Adern (5) anschließend verseilt. Auf diese Weise wird die Herstellung von mehrere optische Adern (5) aufweisenden optischen Aderbündeln (6) bzw. Kabeln (1) wesentlich vereinfacht.

## Beschreibung

Die Erfindung betrifft ein Verfahren zum Herstellen eines eine Mehrzahl von optischen Adern aufweisenden optischen Aderbündels oder optischen Kabels, bei dem jede der optischen Adern durch die Extrusion einer Aderhülle um zumindest eine optische Faser gebildet wird und die optischen Adern verseilt werden, bzw. eine Vorrichtung zum Herstellen eines eine Mehrzahl von optischen Adern aufweisenden optischen Aderbündels oder optischen Kabels mit einem zur Extrusion von Aderhüllen um zumindest eine optische Faser dienenden Extruder und einer Aderverseileinrichtung.

Seit langem sind optische Hohl- und Bündeladerkabel oder -bündel bekannt, bei denen beispielsweise um ein zentrales Zug- und Stützelement eine Mehrzahl von optischen Hohl- oder Bündeladern verseilt ist. Die Räume zwischen dem zentralen Element und den optischen Adern können mit einer wasserabweisenden Masse gefüllt sein. Um die optischen Adern in ihrer verseilten Anordnung um das zentrale Element zu halten, ist über der zumindest einen Lage von optischen Hohl- oder Bündeladern eine Bewicklung aus Haltefäden oder -bändern vorgesehen. Zur Herstellung von Spleißverbindungen ist es bei diesen optischen Kabeln allerdings erforderlich, zuvor die Haltefäden oder - bänder zu entfernen und so die optischen Adern und die in diesen verlaufenden optischen Fasern zugänglich zu machen.

Zur Herstellung von optischen Hohl- und Bündeladerkabeln ist es bekannt, zunächst jede der optischen Adern in einem separaten Fertigungsprozeß durch die Extrusion einer ein- oder mehrschichtigen Aderhülle um zumindest eine optische Faser zu bilden, die optische Ader abzukühlen und jede für sich auf einem separaten Aufwickelteller abzulegen. In einem folgenden Fertigungsprozeß werden dann die derart hergestellten optischen Adern von ihren Aufwickeltellern abgezogen, beispielsweise um ein zentrales Element verseilt und mit einer Bewicklung aus Haltefäden oder -bändern versehen. Darüber werden gegebenenfalls zusätzliche Schichten sowie ein Außenmantel aufgebracht.

Ausgehend von diesem Stand der Technik liegt der Erfindung das Problem zugrunde, die Herstellung eines eine Mehrzahl von verseilten optischen Adern aufweisenden optischen Aderbündels oder Kabels zu vereinfachen.

Dieses Problem wird gemäß der Erfindung dadurch gelöst, daß in einem kontinuierlichen Prozeß die Aderhüllen der optischen Adern gleichzeitig extrudiert und die optischen Adern nach der Extrusion der Aderhüllen verseilt werden, bzw. daß die Aderverseileinrichtung und der Extruder in einer Fertigungslinie angeordnet sind, wobei sich die Aderverseileinrichtung hinter dem Extruder befindet, und daß der Extruder einen Mehrfachspritzkopf aufweist.

Die durch die Erfindung erzielbaren Vorteile bestehen insbesondere darin, daß das optische Kabel bzw. Aderbündel auf besonders einfache und kostengünstige Art und Weise herstellbar ist, da die Herstellung des optischen Kabels bzw. Aderbündels ausgehend von den optischen Fasern über die Extrusion der Aderhüllen bis hin zur Verseilung der optischen Adern in einer Fertigungslinie erfolgt und ein Aufwickeln der extrudierten optischen Adern und ein anschließendes Abwickeln dieser optischen Adern für ihre Verseilung vermieden ist. Zudem kann die Herstellvorrichtung einen vergleichsweise einfachen und kompakten Aufbau aufweisen. Darüber hinaus ist keine Bewicklung mit Bändern oder Fäden zum Halten der optischen Adern in ihrem verseilten Zustand erforderlich, da die optischen Adern durch die Verseilung im noch warmen Zustand aneinander haften und so gemeinsam eine Einheit mit festem Zusammenhalt bilden. Bei einem erfindungsgemäß hergestellten optischen Kabel sind die in den optischen Adern verlaufenden optischen Fasern leicht zugänglich, so daß auf einfache Art und Weise mit geringem Aufwand Spleißverbindungen hergestellt werden können.

Durch die in den Unteransprüchen aufgeführten Merkmale sind vorteilhafte Weiterbildungen und Verbesserungen der Erfindung möglich.

Vorteilhaft ist es, wenn die optischen Adern unmittelbar nach der Extrusion der Aderhüllen verseilt werden, so daß die Aderhüllen bei der Verseilung der optischen Adern um ein Zentralelement noch eine vergleichsweise hohe Temperatur aufweisen und daher besonders fest an dem Zentralelement haften. Auf diese Weise wird auch ohne zusätzliche Haltefäden oder -bänder ein besonders sicherer Halt der optischen Adern im verseilten Zustand gewährleistet.

Aus dem gleichen Grund ist es besonders vorteilhaft, wenn das Zentralelement mit einem schon bei niedrigen Temperaturen schmelzbaren Kunststoff, z. B. einem sogenannten Schmelzkleber, beschichtet ist.

Es ist ebenfalls vorteilhaft, wenn die optischen Adern nach der Extrusion der Aderhüllen zunächst abgekühlt und dann verseilt werden, so daß unzulässig starke Verformungen der Aderhüllen durch die bei der Verseilung auftretenden Zug- und Querkräfte vermieden sind. Eine nur mäßige Abkühlung der Aderhüllen bietet in diesem Fall den Vorteil eines sicheren Haltes der optischen Adern in ihrem verseilten Zustand.

Für eine besonders einfache und kostengünstige Herstellung des optischen Kabels bzw. Aderbündels ist es von Vorteil, wenn die Aderhüllen aller optischen Adern des optischen Kabels bzw. Aderbündels in einem Arbeitsgang mittels eines einen Mehrfachspritzkopf aufweisenden Extruders extrudiert werden.

Um die in den Aderhüllen der optischen Adern verlaufenden optischen Fasern möglichst frei von mechanischen Beanspruchungen zu halten und den Zusammenhalt der aus den optischen Adern gebildeten Einheit zu verbessern, ist es von Vorteil, wenn die optischen Adern mit wechselnder Schlagrichtung verseilt sind.

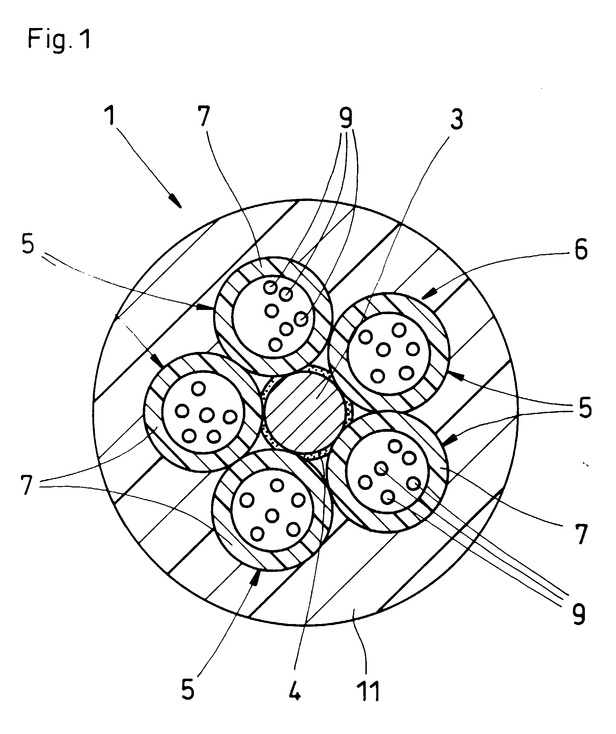

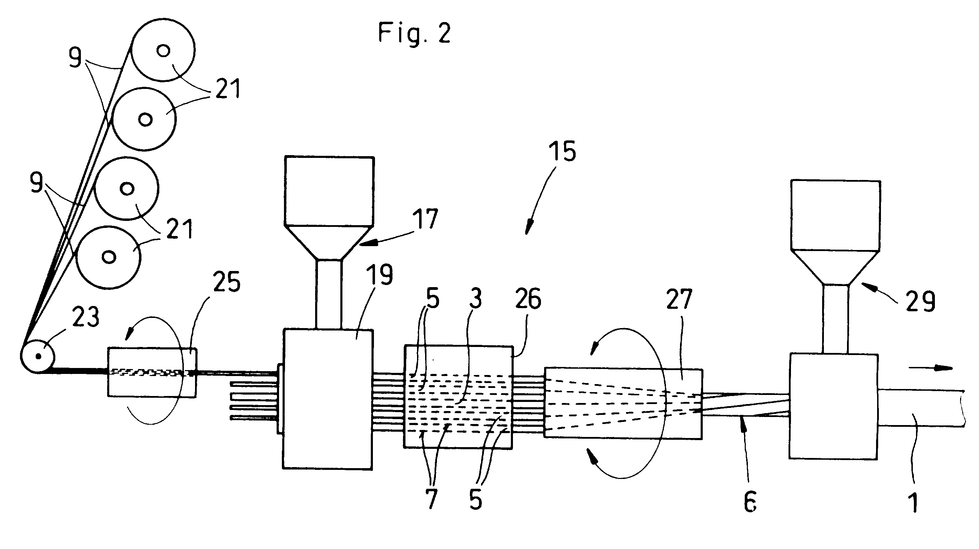

Ausführungsbeispiele der Erfindung sind in der Zeichnung vereinfacht dargestellt und in der nachfolgenden Beschreibung näher erläutert. Es zeigen die Fig. 1 ein Ausführungsbeispiel eines mittels des erfindungsgemäßen Verfahrens bzw. mit der erfindungsgemäßen Vorrichtung hergestellten optischen Kabels und die Fig. 2 eine erfindungsgemäße Vorrichtung zum Herstellen eines optischen Kabels.

Das in der Fig. 1 beispielhaft dargestellte optische Kabel 1 weist ein zugfestes Zentralelement 3 auf, um das beispielsweise fünf optische Adern 5 zu einem optischen Aderbündel 6 verseilt sind. Jede der optischen Adern 5 hat eine ein- oder mehrschichtige, aus Kunststoff bestehende und durch Extrusion ausgebildete Aderhülle 7, in der z. B. eine Mehrzahl von optischen Fasern 9 verläuft. Zur Sicherstellung der Längswasserdichtigkeit des optischen Kabels 1 können die zwischen den optischen Adern 5 und dem Zentralelement 3 gebildeten Hohlräume sowie die Aderhüllen 7 mit einem geeigneten wasserabweisenden oder wasserquellbaren Material gefüllt sein.

Durch die Verseilung der optischen Adern 5 im noch warmen Zustand der Aderhüllen 7 um das Zentralelement 3 haften die optischen Adern 5 fest an den jeweils benachbarten optischen Adern sowie an dem Zentralelement 3, so daß ein fester Halt der optischen Adern 5 in ihrem um das Zentralelement 3 verseilten Zustand gewährleistet ist.

Um den Halt der optischen Adern 5 in ihrem verseilten Zustand weiter zu verbessern, weist das bei dem Ausführungsbeispiel verwendete Zentralelement 3 an seinem Umfang eine aus einem schon bei niedrigen Temperaturen schmelzbaren Kunststoff bestehende Schicht 4 auf. Diese Schicht 4 kann beispielsweise aus einem üblichen Schmelzkleber bestehen. Bei der Verseilung der optischen Adern 5 mit ihren noch warmen Aderhüllen 7 wird die Schicht 4 des Zentralelements 3 aufgeschmolzen, so daß die Aderhüllen 7 der optischen Adern 5 mit dem Zentralelement 3 verkleben und die optischen Adern 5 besonders fest und sicher in ihrer Position gehalten sind. Beispielsweise unmittelbar über dem aus den um das Zentralelement 3 verseilten optischen Adern 5 gebildeten Aderbündel 6 ist ein Außenmantel 11 vorgesehen, der z. B. durch die Extrusion eines geeigneten Kunststoffs ausgebildet ist.

Die in der Fig. 2 beispielhaft dargestellte Vorrichtung 15 zum Herstellen eines z. B. vier um ein Zentralelement 3 verseilte optische Adern 5 aufweisenden optischen Kabels 1 hat einen zur Extrusion der Aderhüllen 7 dienenden Extruder 17. Der Extruder 17 weist einen Mehrfachspritzkopf 19 auf, der die parallele und gleichzeitige Extrusion der vier Aderhüllen 7 ermöglicht.

Wie in der Fig. 2 für eine der optischen Adern 5 beispielhaft dargestellt ist, werden zunächst für die Herstellung einer optischen Ader 5 z. B. vier optische Fasern 9 von Faserspulen 21 abgezogen, über eine oder mehrere Umlenkrollen 23 geführt und mittels einer Faserverseileinrichtung 25 beispielsweise mit gleichbleibender Schlagrichtung verseilt. Die so ausgebildete Fasergruppe wird gleichzeitig mit den drei anderen auf gleiche Weise ausgebildeten Fasergruppen in dem Extruder 17 mittels des Mehrfachspritzkopfes 19 jeweils mit einer Aderhülle 7 umgeben. Die eine hohe Temperatur nahe ihrer Schmelztemperatur aufweisenden Aderhüllen 7 werden anschließend beim gemeinsamen Durchlauf der optischen Adern 5 durch eine Kühleinrichtung 26 abgekühlt. In einem folgenden Verfahrensschritt werden die vier optischen Adern 5 mittels einer Aderverseileinrichtung 27 um das Zentralelement 3 beispielsweise mit wechselnder Schlagrichtung, der sogenannten SZ-Verseilung, verseilt. Durch die Abkühlung der Aderhüllen 7 vor der Verseilung der optischen Adern 5 wird eine unzulässig starke Verformung der Aderhüllen 7 durch die bei der Verseilung auf die optischen Adern 5 einwirkenden Zug- und Querkräfte vermieden.

Da die Aderverseileinrichtung 27 bei dem dargestellten Ausführungsbeispiel hinter der Kühleinrichtung 26 angeordnet und die Kühleinrichtung 26 so ausgelegt ist, daß sie nur eine mäßige Abkühlung der Aderhüllen 7 bewirkt, weisen die Aderhüllen 7 der optischen Adern 5 beim Verseilen noch eine erhöhte Temperatur auf. Diese erhöhte Temperatur reicht aus, ein Haften der optischen Adern 5 aneinander und an dem Zentralelement 3 zu gewährleisten bzw. die optischen Adern 5 beim Verseilen mit einem an seinem Umfang mit einem schon bei niedrigen Temperaturen schmelzbaren Kunststoff beschichteten Zentralelement 3 zu verkleben. Auf diese Weise werden die optischen Adern 5 fest und sicher in ihrem um das Zentralelement 3 verseilten Zustand gehalten. Im Anschluß an die Verseilung der optischen Adern 5 wird mittels einer Ummantelungseinrichtung 29, die z. B. einen Extruder aufweist, der Außenmantel 11 beispielsweise unmittelbar auf das durch die auf das Zentralelement 3 aufgeseilten optischen Adern 5 gebildete Aderbündel 6 aufgebracht.

## Patentansprüche

1. Verfahren zum Herstellen eines eine Mehrzahl von optischen Adern aufweisenden optischen Aderbündels oder optischen Kabels, bei dem jede der optischen Adern durch die Extrusion einer Aderhülle um zumindest eine optische Faser gebildet wird und die optischen Adern verseilt werden, dadurch gekennzeichnet, daß in einem kontinuierlichen Prozeß die Aderhüllen (7) der optischen Adern (5) gleichzeitig extrudiert und die optischen Adern (5) nach der Extrusion der Aderhüllen (7) verseilt werden.

2. Verfahren nach Anspruch 1, dadurch gekennzeichnet, daß die Aderhüllen (7) der optischen Adern (5) in einem Arbeitsgang mittels eines einen Mehrfachspritzkopf (19) aufweisenden Extruders (17) extrudiert werden.

3. Verfahren nach Anspruch 1 oder 2, dadurch gekennzeichnet, daß die optischen Adern (5) unmittelbar nach der Extrusion der Aderhüllen (7) verseilt werden.

4. Verfahren nach Anspruch 1 oder 2, dadurch gekennzeichnet, daß die optischen Adern (5) nach der Extrusion der Aderhüllen (7) zunächst abgekühlt und dann verseilt werden.

5. Verfahren nach einem der Ansprüche 1 bis 4, dadurch gekennzeichnet, daß die optischen Adern (5) mit wechselnder Schlagrichtung verseilt werden.

6. Verfahren nach einem der Ansprüche 1 bis 5, dadurch gekennzeichnet, daß die optischen Adern (5) um ein mit einem schon bei niedrigen Temperaturen schmelzbaren Kunststoff beschichtetes Zentralelement (3) verseilt werden.

7. Vorrichtung zum Herstellen eines eine Mehrzahl von optischen Adern aufweisenden optischen Aderbündels oder optischen Kabels mit einem zur Extrusion von Aderhüllen um zumindest eine optische Faser dienenden Extruder und einer Aderverseileinrichtung, dadurch gekennzeichnet, daß die Aderverseileinrichtung (27) und der Extruder (17) in einer Fertigungslinie angeordnet sind, wobei sich die Aderverseileinrichtung (27) hinter dem Extruder (17) befindet, und daß der Extruder (17) einen Mehrfachspritzkopf (19) aufweist.

8. Vorrichtung nach Anspruch 7, dadurch gekennzeichnet, daß die Aderverseileinrichtung (27) unmittelbar hinter dem Extruder (17) angeordnet ist.

9. Vorrichtung nach Anspruch 7, dadurch gekennzeichnet, daß zwischen dem Extruder (17) und der Aderverseileinrichtung (27) eine Kühleinrichtung (26) angeordnet ist.
